# EUROPÄISCHE PATENTANMELDUNG

(11) **EP 4 227 533 A1**
(43) Veröffentlichungstag der Anmeldung: **16.08.2023**
(21) Anmeldenummer: 22156037.8
(22) Anmeldetag: 10.02.2022
(51) Int. Cl.: F04B 53/14, F16J 9/12

(54) **KOLBEN FÜR EINEN VERDICHTER, VERDICHTER SOWIE VERFAHREN UND ABZIEHWERKZEUG ZUR DEMONTAGE EINES KOLBENS**

(71) Anmelder: Burckhardt Compression AG, 8404 Winterthur (CH)
(72) Erfinder: GERBODE, Philipp, 8408 Winterthur (CH); GÜRTLER, Patrick, 8408 Winterthur (CH)
(74) Vertreter: Hepp Wenger Ryffel AG

(57) **Zusammenfassung**

Ein Kolben (1) für einen Verdichter umfasst eine Kolbenstange (2) , welche eine Längsachse (L) definiert, und ein Kolbenringpaket (11) mit einer sich entlang der Längsachse erstreckenden Trägerhülse (9), welche an einer Umfangsfläche (2a) der Kolbenstange angeordnet und lösbar an der Kolbenstange befestigt ist, und einer Vielzahl von entlang der Längsachse nebeneinander angeordneten Kolbenringeinrichtungen (34), welche an einer Außenumfangsfläche der Trägerhülse angeordnet und an der Trägerhülse befestigt sind, wobei vorzugsweise die Trägerhülse eine mechanische Schnittstelle (9g) zur Anbringung eines Abziehwerkzeugs (20) zum Aufbringen einer entlang der Längsachse gerichteten Kraft (F) aufweist.

## Beschreibung

### Beschreibung

Die Erfindung betrifft einen Kolben für einen Verdichter, einen Verdichter, insbesondere einen Hochdruckverdichter mit einem solchen Kolben sowie ein Abziehwerkzeug und ein Verfahren zur Demontage des Kolbens.

### Stand der Technik

Hochdruckkolbenverdichter werden häufig zum Verdichten von Gasen wie z.B. Methan oder Wasserstoff auf einen Druck in einem Bereich zwischen 100 Bar und 1000 Bar eingesetzt. Kolbenverdichter weisen typischerweise einen in einem Zylinder zwischen einem oberen und einem unteren Totpunkt geführten Kolben auf. Der Kolben umfasst typischerweise eine Kolbenstange und eine Vielzahl von Kolbenringen, die an einem Außenumfang der Kolbenstange befestigt sind. Die Kolbenringe können beispielsweise Trägerringe aufweisen, wobei Dichtelemente an den Trägerringen angebracht sind. Die Dichtelemente dienen dazu, einen vom Kolben und dem Zylinder definierten Kompressionsraum abzudichten und, optional, eine Schmiermittelmenge zwischen Zylinder und Kolben zu dosieren.

Die Kolbenringe sind Verschleißteile, welche nach einer gewissen Zeit ersetzt werden müssen. Das Ersetzen der Kolbenringe kann, je nach Bauart des Kolbens eine komplette Zerlegung des Kolbens erfordern und ist daher häufig aufwändig und benötigt viel Zeit. Ferner kann es vorkommen, dass die Platzverhältnisse am Einsatzort des Verdichters eng sind, was den Ersatz zusätzlich erschwert.

In der JP 2003 206860 A wird ein Kolbenverdichter zum Verdichten von Gas beschrieben, welcher einen Kolben mit einer Kolbenstange und daran montierten Kolbenringeinrichtungen aufweist. Die Kolbenringeinrichtungen weisen jeweils einen Trägerring mit L-förmigem Querschnitt und einem Dichtelement auf, das an dem Trägerring fixiert ist. Um den Austausch der Dichtelemente zu erleichtern, sind diese in Umfangsrichtung geteilt, so dass diese vom Trägerring abziehbar sind, ohne den Trägerring von der Kolbenstange zu entfernen.

### Darstellung der Erfindung

Aufgabe der Erfindung ist es, Lösungen zu finden, welche den Austausch von Dichtelementen eines Kolbens eines Verdichters erleichtern.

Diese Aufgabe wird jeweils durch die Gegenstände der unabhängigen Ansprüche gelöst. Vorteilhafte Ausführungsformen und Weiterbildungen sind Gegenstand der auf die unabhängigen Ansprüche rückbezogenen Unteransprüche sowie der nachfolgenden Beschreibung und der Figuren.

Gemäß einem ersten Aspekt der Erfindung ist ein Kolben für einen Verdichter vorgesehen. Der erfindungsgemäße Kolben umfasst eine Kolbenstange, welche eine Längsachse definiert, und ein Kolbenringpaket mit einer sich entlang der Längsachse erstreckenden Trägerhülse, welche an einer Umfangsfläche der Kolbenstange angeordnet und lösbar an der Kolbenstange befestigt ist, und einer Vielzahl von entlang der Längsachse nebeneinander angeordneten Kolbenringeinrichtungen, welche an einer Außenumfangsfläche der Trägerhülse angeordnet und an der Trägerhülse befestigt sind, wobei vorzugsweise die Trägerhülse eine mechanische Schnittstelle zur Anbringung eines Abziehwerkzeugs zum Aufbringen einer entlang der Längsachse gerichteten Kraft aufweist.

Gemäß einem zweiten Aspekt der Erfindung ist ein Verdichter, insbesondere ein Hochdruckverdichter zum Verdichten von Gasen, wie z.B. Erdgas, Methan oder Wasserstoff, mit einem Kolben nach dem ersten Aspekt der Erfindung vorgesehen. Der Verdichter kann beispielsweise dazu eingerichtet sein, Gas zu verdichten, beispielsweise auf einen Druck in einem Bereich zwischen 100 bar und 1000 bar, insbesondere in einem Bereich zwischen 100 bar und 300 bar zu verdichten. Beispielsweise kann der Kolben in einem Zylinder linear zwischen zwei Totpunkten bewegbar gelagert sein.

Gemäß einem dritten Aspekt der Erfindung ist ein Abziehwerkzeug zur Demontage eines Kolbens nach dem ersten Aspekt der Erfindung vorgesehen. Das Abziehwerkzeug umfasst eine Kopplungseinrichtung zur Anbringung an der bevorzugten mechanischen Schnittstelle der Trägerhülse und eine Zugeinrichtung zur Aufbringung einer entlang der Längsachse gerichteten Kraft auf die Kopplungseinrichtung.

Gemäß einem vierten Aspekt der Erfindung ist ein Verfahren zur Demontage eines Kolbens nach dem ersten Aspekt der Erfindung vorgesehen. Bei dem Verfahren erfolgt ein Verbinden eines Abziehwerkzeugs mit der bevorzugten mechanischen Schnittstelle der Trägerhülse des Kolbenringpakets und ein Abziehen des Kolbenringpakets als Ganzes von der Kolbenstange durch Aufbringen einer entlang der Längsachse gerichteten Kraft auf die Trägerhülse mittels des Abziehwerkzeugs. Beispielsweise kann das Abziehwerkzeug gemäß dem dritten Aspekt der Erfindung zur Durchführung des Verfahrens verwendet werden.

Eine der Erfindung zugrundeliegende Idee besteht darin, die Kolbenringe, hierin auch als Kolbenringeinrichtungen bezeichnet, auf einer Trägerhülse zu einem Kolbenringpaket oder einer Patrone vorzumontieren und dieses Paket als vormontierte Einheit an der Kolbenstange zu fixieren. Das heißt, eine Vielzahl von Kolbenringen ist an der Außenumfangsfläche der Trägerhülse vormontiert und die Trägerhülse ist auf eine Außenumfangsfläche der Kolbenstange aufgeschoben bzw. die Kolbenstange ist durch die Trägerhülse durchgeführt. Die Trägerhülse weist vorzugsweise ferner eine mechanische Schnittstelle oder Verbindungsstruktur auf, an welcher ein Abziehwerkzeug fixiert werden kann, um zur Demontage des Kolbenringpakets eine axiale Kraft auf die Trägerhülse aufzubringen. Somit können die Kolbenringe auf einfache Weise gemeinsam mit der Trägerhülse von der Kolbenstange abgezogen werden.

Ein Vorteil der Erfindung liegt darin, dass Trägerhülse und Kolbenringe gemeinsam als Ganzes von der Kolbenstange abziehbar sind, da die Kolbenringe an der Trägerhülse und nicht direkt am Außenumfang der Kolbenstange befestigt sind. Durch die bevorzugte mechanische Schnittstelle wird das Abziehen der Trägerhülse von der Kolbenstange weiter vereinfacht. Somit wird die Demontage der Kolbenringe sowie die Monate neuer Kolbenringe und damit der gleichzeitige Austausch aller Kolbenringe vereinfacht.

Ein weiterer Vorteil des vormontierten Kolbenringpakets liegt darin, dass dieses mit hoher Präzision herstellbar ist, dass dieser an einem Produktionsstandort konfigurierbar ist und allenfalls geprüft werden kann, und dass dadurch beim Austausch des Kolbenringpakets am Einsatzort des Verdichters, z.B. auf einem Transportschiff, einer Förderplattform oder dergleichen, der Aufwand für den Aufbau des Kolbenringpaktes und eine Zentrierung und Einpassung der Kolbenringe verringert werden kann.

Gemäß manchen Ausführungsformen kann vorgesehen sein, dass die Trägerhülse reibschlüssig an der Umfangsfläche der Kolbenstange befestigt ist. Demnach kann eine Innenumfangsfläche der Trägerhülse zumindest bereichsweise reibschlüssig mit der Umfangsfläche der Kolbenstange verbunden sein bzw. an der Umfangsfläche anliegen. Dadurch wird eine zuverlässige axiale Fixierung der Trägerhülse erzielt. Optional kann die Trägerhülse zusätzlich durch ein mit der Kolbenstange verschraubtes Sicherungselement axial gesichert sein.

Gemäß manchen Ausführungsformen kann die bevorzugte mechanische Schnittstelle durch ein Gewinde ausgebildet sein. Dies bietet den Vorteil, dass das Verbinden des Abziehwerkzeugs mit der Trägerhülse erleichtert wird.

Gemäß einer beispielhaften Ausführungsform kann eine Innenumfangsfläche der Trägerhülse in einem ersten Endbereich der Trägerhülse an einem ersten axialen Abschnitt der Umfangsfläche der Kolbenstange anliegen und das Gewinde kann an einem in Bezug auf die Längsachse entgegengesetzt zu dem ersten Endbereich gelegenen zweiten Endbereich der Trägerhülse an der Innenumfangsfläche als Innengewinde ausgebildet sein, wobei die Innenumfangsfläche im zweiten Endbereich der Trägerhülse in einer senkrecht auf die Längsachse stehenden radialen Richtung beabstandet zu einem zweiten axialen Abschnitt der Umfangsfläche der Kolbenstange gelegen ist. Die Kolbenstange kann sich somit von einem ersten Endbereich der Trägerhülse zu einem zweiten Endbereich der Trägerhülse hin verjüngen, z.B. an einer Stufe oder einem Übergangskonus, so dass zwischen dem im zweiten Endbereich der Trägerhülse vorgesehenen Innengewinde und dem Außenumfang der Kolbenstange ein ringförmiger Spalt ausgebildet ist, in welchen das Abziehwerkzeug eingeführt werden kann. Somit wird die Demontage des Kolbenringpakets weiter erleichtert. Ferner bietet das Innengewinde den Vorteil, dass der Platzbedarf für die bevorzugte mechanische Schnittstelle geringgehalten wird.

Gemäß manchen Ausführungsformen kann vorgesehen sein, dass die Trägerhülse einen Hülsenkörper und einen an einem axialen Ende des Hülsenkörpers radial abstehenden Bund aufweist, wobei eine in Bezug auf die Längsachse letzte Kolbenringeinrichtung an dem Bund anliegt. Die einzelnen Kolbenringe können auf diese Weise sehr einfach in axialer Richtung festgelegt werden. Das axiale Ende, an welchem der Bund in der radialen Richtung vorsteht, kann beispielsweise das Ende des ersten Endbereichs des Trägerkörpers bilden, welcher optional an der Umfangsfläche der Kolbenstange anliegt. Mit anderen Worten ist der Bund vorzugsweise entgegengesetzt zu der bevorzugten mechanischen Schnittstelle angeordnet, die ihrerseits vorteilhafterweise ebenfalls in einem Endbereich der Trägerhülse angeordnet ist.

Optional kann der Bund an einem Absatz der Kolbenstange anliegen. Somit erfolgt auf einfache Weise eine axiale Festlegung des Kolbenringpakets an der Kolbenstange.

Gemäß manchen Ausführungsformen können die Kolbenringeinrichtungen entlang der Längsachse miteinander verbunden sein. Demnach sind Kolbenringeinrichtungen vorteilhaft in der axialen Richtung an der Trägerhülse festgelegt.

Gemäß einer beispielhaften Ausführungsform kann vorgesehen sein, dass das Kolbenringpaket ein erstes Endstück und ein zweites Endstück aufweist, wobei die Kolbenringeinrichtungen zwischen dem ersten und dem zweiten Endstück eingespannt sind. Somit wird auf einfache Weise eine Fixierung aller Kolbenringe relativ zueinander in axialer Richtung erzielt.

Gemäß manchen Ausführungsformen kann jede der zwischen dem ersten und dem zweiten Endstück eingespannten Kolbenringeinrichtungen ein Durchgangsloch aufweisen und eine Gewindestange, welche das erste und das zweite Endstück miteinander verbindet, kann sich durch die Durchgangslöcher hindurch erstrecken. Beispielsweise kann die Gewindestange mit einem Gewinde, das an dem zweiten Endstück vorgesehen ist, verschraubt sein, und das erste Endstück kann über eine Mutter an der Gewindestange gesichert sein. Die Gewindestange bietet den Vorteil, dass die Klemmkräfte in der axialen Richtung präzise einstellbar sind. Ferner kann auf diese Weise eine Zentrierung der Kolbenringe vereinfacht werden.

Optional kann das erste Endstück durch ein Ringelement und das zweite Endstück durch eine weitere Kolbenringeinrichtung gebildet sein. Somit wird die Anzahl der Komponenten des Kolbenringpakets vorteilhaft verringert, da das zweite Endstück sowohl die Funktion eines Kolbenrings übernimmt, als auch die Funktion der Fixierung der anderen Kolbenringe.

Gemäß manchen Ausführungsformen kann vorgesehen sein, dass die Kolbenringeinrichtungen jeweils einen die Außenumfangsfläche der Trägerhülse umschließenden Trägerring und ein Dichtelement aufweisen, welches an dem Trägerring befestigt ist.

Gemäß manchen Ausführungsformen des Abziehwerkzeugs kann vorgesehen sein, dass die Kopplungseinrichtung eine Hülse, in welcher ein Endbereich der Kolbenstange aufnehmbar ist und welche mit der bevorzugten mechanischen Schnittstelle der Trägerhülse koppelbar ist, und eine mit der Hülse verbundene Stirnplatte aufweist, welche ein Durchgangsloch mit einem Innengewinde aufweist, wobei die Zugeinrichtung eine Gewindestange aufweist, welche in das Innengewinde der Stirnplatte einschraubbar ist, um sich gegen ein axiales Ende der Kolbenstange abzustützen. Die Hülse des Abziehwerkzeugs kann beispielsweise ein Außengewinde aufweisen, welches mit einer als Innengewinde ausgebildeten mechanischen Schnittstelle der Trägerhülse verschraubbar ist. Zum Abziehen der Trägerhülse, beispielsweise bei dem oben beschriebenen Verfahren, wird die Gewindestange des Abziehwerkzeugs in das Innengewinde der Stirnplatte der Hülse eingeschraubt und drückt somit gegen das axiale Ende der Kolbenstange. Die entlang der Längsachse von der Kolbenstange weg gerichtete Reaktionskraft wird über das Innengewinde der Stirnplatte an die Hülse und von dieser auf die Trägerhülse übertragen, so dass die Trägerhülse auf einfache Weise von der Kolbenstange abgezogen werden kann.

Die für einen Aspekt der Erfindung offenbarten Merkmale und Vorteile sind auch für die jeweils anderen Aspekte offenbart.

### Kurze Beschreibung der Zeichnungen

Die zur Erläuterung der Ausführungsbeispiele verwendeten Zeichnungen zeigen in:
- Fig. 1: eine perspektivische Ansicht eines Kolbens gemäß einem Ausführungsbeispiel der Erfindung;
- Fig. 2: eine Schnittansicht des in Fig. 1 gezeigten Kolbens;
- Fig. 3: eine Schnittansicht eines Kolbens gemäß einem weiteren Ausführungsbeispiel; und
- Fig. 4: die Schnittansicht aus Fig. 2 während der Demontage des Kolbens durch ein Verfahren gemäß einem Ausführungsbeispiel der Erfindung, das mithilfe eines Abziehwerkzeugs gemäß einem Ausführungsbeispiel der Erfindung durchgeführt wird.

Grundsätzlich sind in den Zeichnungen gleiche Teile mit gleichen Bezugszeichen versehen, sofern nichts Gegenteiliges angegeben ist.

### Wege zur Ausführung der Erfindung

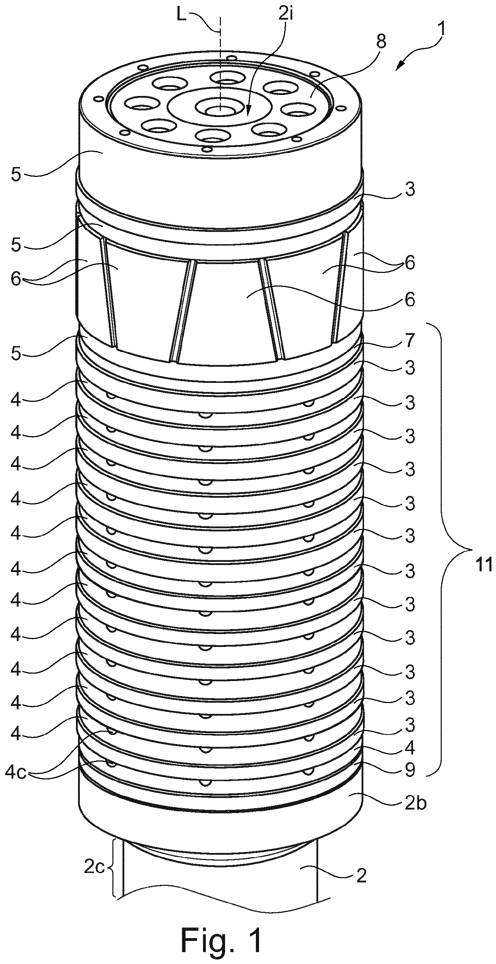

Fig. 1 zeigt beispielhaft eine perspektivische Ansicht eines Kolbens 1 für einen Verdichter (nicht dargestellt). Der Verdichter kann insbesondere ein Hochdruckkolbenverdichter sein, der dazu eingerichtet ist, Gase, wie z.B. Erdgas, Methan, Wasserstoff etc., zu verdichten, insbesondere auf einen Druck in einem Bereich zwischen 100 bar und 500 bar. Beispielsweise kann der Verdichter auf einem Transportschiff oder einer Förderplattform eingesetzt werden, z.B. um Gas, das aufgrund von Verdampfung aus der flüssigen Phase in einem Lagerbehälter anfällt, zu verdichten und einem Verbrennungsmotor zuzuführen. Der im Folgenden noch im Detail beschriebene Kolben 1 kann dabei in einer horizontalen oder einer vertikalen Anordnung durch eine Kurbelwelle alternierend zwischen zwei entgegengesetzten Totpunkten bewegt werden. Der Kolben 1 kann dabei in einem Zylinder (nicht gezeigt) geführt sein. Optional kann der Kolben 1 als doppelt wirkender Kolben ausgestaltet sein und sowohl bei einer Bewegung in einer ersten Richtung als auch bei einer Bewegung in der entgegengesetzten Richtung Verdichtungsarbeit verrichten.

Wie in Fig. 1 beispielhaft dargestellt, kann der Kolben 1 eine Kolbenstange 2 und ein Kolbenringpaket 11 aufweisen. Ferner kann der Kolben 1 ein Kolbenoberteil 5 und/oder eine Axialsicherung 8 aufweisen.

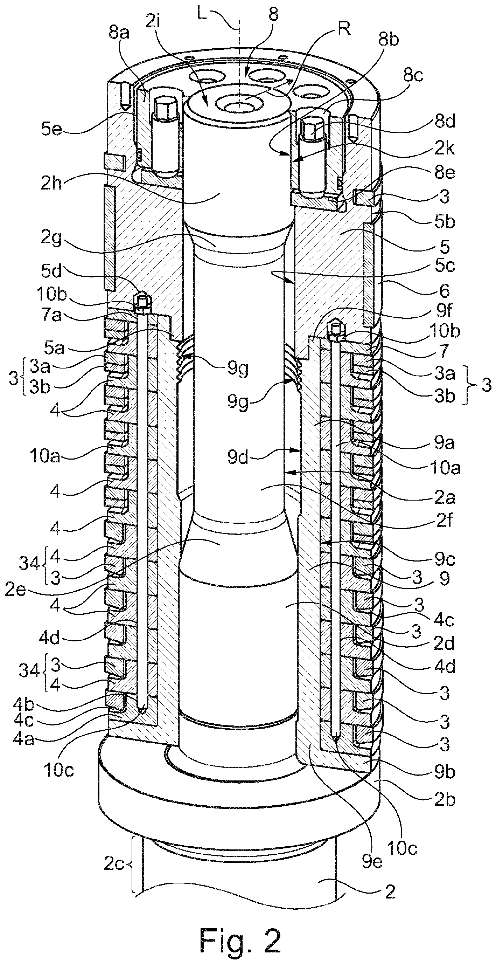

Fig. 2 zeigt den in Fig. 1 dargestellten Kolben 1 teilweise im Schnitt. Wie in den Fign. 1 und 2 beispielhaft gezeigt ist, kann die Kolbenstange 2 beispielsweise als Welle mit einem kreisförmigen Querschnitt realisiert sein. Allgemein definiert die Kolbenstange 2 eine Längsachse L, welche von einer Umfangsfläche 2a der Kolbenstange 2 umschlossen ist. Wie in Fig. 2 gezeigt, kann die Kolbenstange 2 einen als Zentrierabschnitt ausgestalteten ersten axialen Abschnitt 2d mit einem ersten Durchmesser und einen entlang der Längsachse L beabstandet zu diesem gelegenen Dehnabschnitt 2f mit einem zweiten Durchmesser aufweisen, der kleiner als der erste Durchmesser ist. Wie in Fig. 2 beispielhaft gezeigt, können der erste axiale Abschnitt 2d und der Dehnabschnitt 2f durch einen ersten konischen Abschnitt 2e miteinander verbunden sein. Ein Endabschnitt 2h der Kolbenstange 2, welcher an einer Stirnseite 2i der Kolbenstange 2 endet, weist einen dritten Durchmesser auf. Der dritte Durchmesser kann, wie in Fig. 2 beispielhaft gezeigt, im Wesentlichen gleich dem ersten Durchmesser sein. In diesem Fall kann der Dehnabschnitt 2f beispielsweise durch einen zweiten konischen Abschnitt 2g, wie in Fig. 2 beispielhaft gezeigt, oder durch einen Absatz mit dem Endabschnitt 2h verbunden sein. Es ist aber auch denkbar, dass der dritte Durchmesser gleich dem zweiten Durchmesser oder allgemein kleiner dem ersten Durchmesser ist.

Optional kann der Endabschnitt 2h der Kolbenstange 2 ein Außengewinde 2k aufweisen, wie dies in Fig. 2 ebenfalls beispielhaft gezeigt ist. Ebenfalls optional kann die Kolbenstange 2 einen Absatz 2b aufweisen, ausgestaltet als ein Kolbenboden, welcher beabstandet zur Stirnseite 2i der Kolbenstange 2 angeordnet ist und in einer senkrecht zur Längsachse L verlaufenden radialen Richtung R vorsteht. Beispielsweise kann der Absatz 2b in Bezug auf die Längsachse L unmittelbar anschliessend an den ersten axialen Abschnitt 2d angeordnet sein, insbesondere derart, dass der erste axiale Abschnitt 2d zwischen der Stirnseite 2i und dem Absatz 2b gelegen ist, wie dies in Fig. 2 beispielhaft gezeigt ist.

Die Kolbenstange 2 kann insbesondere aus einem Metallmaterial, wie z.B. einem hochfesten Baustahl gebildet sein.

Wie in Fig. 1 und mit mehr Details in Fig. 2 dargestellt, kann das Kolbenringpaket 11 eine Trägerhülse 9 und eine Vielzahl von Kolbenringeinrichtungen 34 aufweisend je einen Kolbenring 3 und einen Kammerring 4 umfassen. Optional kann außerdem vorgesehen sein, dass das Kolbenringpaket 11 ein ersten Endstück 4a, beispielsweise ausgestaltet als letzter Kammerring,und ein zweites Endstück 7, beispielsweise ausgestaltet als ein Deckring , umfasst, wie dies in Fig. 2 beispielhaft gezeigt ist. Ebenfalls optional umfasst das Kolbenringpaket 11 ferner eine oder mehrere Gewindestangen 10a, wie in Fig. 2 beispielhaft gezeigt, welche die Kolbenringeinrichtungen 34 umfassend Kolbenringe 3 und Kammerringe 4, das erste Endstück 4a und das zweite Endstück 7 zusammenhalten. Wie in Figur 2 dargestellt kann ein Kolbenring 3 in möglichen Ausgestaltungen aus einem einzigen Teil oder aus einer Mehrzahl von Teilringen 3a, 3b bestehen. Figur 2 zeigt gegen den ersten Endbereich 9e der Trägerhülse 9 hin angeordnete Kolbenringeinrichtungen 34 umfassend einen Kammerring 4 und jeweils einen einzigen Kolbenring 3, wogegen die gegen den zweite Endbereich 9f hin angeordneten Kolbenringeinrichtungen 34 einen Kammerring 4 und jeweils einen Kolbenring 3 bestehend aus einem ersten Kolbenringteil 3a und einem zweiten Kolbenringteil 3b umfassen. In einer weiteren, nicht dargestellten Ausführungsform könnten auch alle Kolbenringe 3 aus einem einzigen Teil bestehen, oder konnten alle Kolbenringe 3 aus zumindest zwei Kolbenringteilen, einem ersten Kolbenringteil 3a und einem zweiten Kolbenringteil 3b bestehen.

Die Trägerhülse 9 dient als Halterung oder Träger für die Kolbenringeinrichtungen 34. Wie in Fig. 2 beispielhaft gezeigt, kann die Trägerhülse 9 einen zylindrischen Hülsenkörper 9a aufweisen. Allgemein ist die Trägerhülse 9 als längliches, hülsenförmiges Teil realisiert, das sich zwischen einem ersten Endbereich 9e und einem entgegengesetzt gelegenen zweiten Endbereich 9f erstreckt. Die Trägerhülse 9, insbesondere der Hülsenkörper 9a, weist eine Innenumfangsfläche 9d und eine entgegengesetzt orientierte Außenumfangsfläche 9c auf. Die Außenumfangsfläche 9c kann beispielsweise die Mantelfläche eines Kreiszylinders bilden. Die Innenumfangsfläche 9d kann ebenfalls zylindrische Bereiche ausbilden. Ferner kann die Innenumfangsfläche 9d beispielsweise Absätze aufweisen bzw. ausbilden, welche jeweils zylindrische Bereiche in Bezug auf die Längsachse L begrenzen, wie dies in Fig. 2 beispielhaft dargestellt ist.

Optional kann die Trägerhülse 9 einen an einem axialen Ende, z.B. an dem Ende des Hülsenkörpers 9a, z.B. an dem Ende, an das sich der erste Endbereich 9e anschließt, einen Bund 9b aufweisen. Wie in Fig. 2 beispielhaft gezeigt, steht der Bund 9b senkrecht von der Außenumfangsfläche 9c des Hülsenkörpers 9a ab, und verläuft somit in der radialen Richtung R.

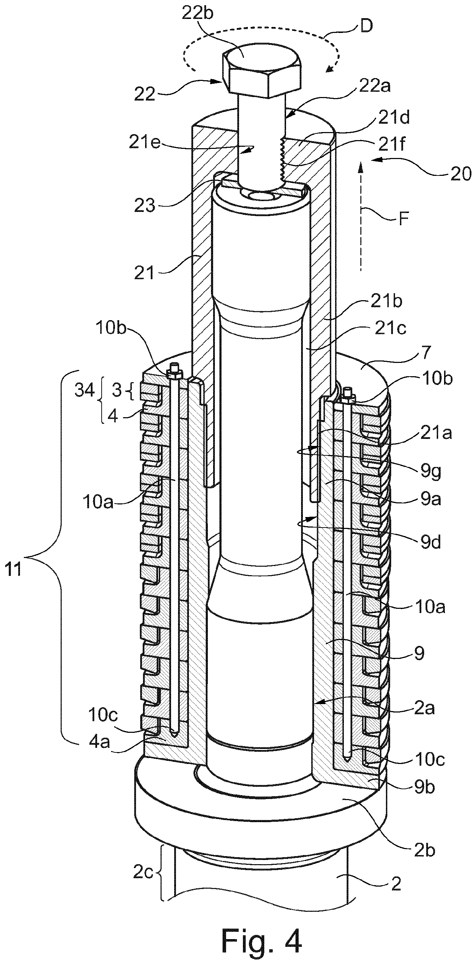

Die Trägerhülse 9 weist außerdem bei dieser bevorzugten Ausführungsform eine mechanische Schnittstelle 9g auf, welche zur Verbindung bzw. zur Anbringung eines Abziehwerkzeugs 20 (Fig. 4) eingerichtet ist. Die mechanische Schnittstelle 9g kann beispielsweise, wie in den Figuren 2 und 4 dargestellt, durch ein Gewinde realisiert sein, das an der Trägerhülse 9, z.B. am Ende des Hülsenkörpers 9a ausgebildet ist. Fig. 2 zeigt beispielhaft, dass die mechanische Schnittstelle als Innengewinde 9g realisiert ist, welches an der Innenumfangsfläche 9d der Trägerhülse 9 ausgebildet ist. Wie in Fig. 2 beispielhaft gezeigt ist, kann die mechanische Schnittstelle9g, unabhängig von deren konkreter Gestaltung, in dem zweiten Endbereich 9f der Trägerhülse 9 angeordnet sein. Im Beispiel von Fig. 2 ist das Innengewinde 9g daher in dem abgewandt vom dem optionalen Bund 9b gelegenen zweiten Endbereich 9f des Hülsenkörpers 9a ausgebildet. Anstatt eines Gewindes kann die mechanische Schnittstelle 9g auch anders ausgestaltet sein, um zwischen der Trägerhülse 9 und dem Abziehwerkzeug 20 eine Verbinden zu bewerkstelligen, die ein Abziehen der Trägerhülse 9 ermöglichst, z.B. durch eine mechanische Schnittstelle 9g mit rechtwinklig verlaufenden Schlitzen in der Trägerhülse 9, die beispielsweise Teil eines Bajonettverschlusses mit dem Abziehwerkzeug 20 bilden.

Wie in Fig. 2 weiterhin gezeigt ist, umfasst die Kolbenringeinrichtungen 34 vorzugsweise jeweils einen Kammerring 4 und einen Kolbenring 3. Die Kammerringe 4 können beispielsweise einen L-förmigen Querschnitt aufweisen, wie in Fig. 2 beispielhaft gezeigt. Die Kolbenringe 3 sind an dem Kammerring 4 gehalten, insbesondere an dessen Außenumfang. Wie in Fig. 2 gezeigt, können die Kolbenringe 3 z.B. in einem Aufnahmeraum des Kammerrings 4 gehalten sein, welcher durch den L-förmigen Querschnitt gebildet ist. Allgemein stehen die Kolbenringe 3 über den Außenumfang der Kammerringe 4 vor. In Fig. 2 ist beispielhaft gezeigt, dass eine erste Teilmenge der Kolbenringe 3 als Dichtelemente mit einem rechteckförmigen Querschnitt und eine zweite Teilmenge der Kolbenringe 3 als Dichtelemente mit einem trapezförmigen Querschnitt ausgestaltet sind. Es ist aber auch denkbar, dass alle Kolbenringe 3 gleich ausgebildet sind. Ferner sind auch andere Querschnittsformen der Kolbenringe 3 denkbar und/oder dass alle Kolbenringe 3 denselben Querschnitt aufweisen. Auch kann vorgesehen sein, dass mehrere Teilkolbenringe 3a, 3b eines Kolbenrings 3 an einem Kammerring 4 gehalten sind. Wie in Fig. 1 dargestellt ist, können die Kolbenringeinrichtungen 34, insbesondere die Kammerringe 4 jeweils zumindest ein Durchgangsloch 4c aufweisen. Entlang einer Umfangsrichtung können mehrere Durchgangslöcher 4c je Kolbenringeinrichtung 34 vorgesehen sein, z.B. zwei, drei oder vier Stück. In Fig. 2 ist rein beispielhaft eine Schnittdarstellung gezeigt, in welcher zwei Durchgangslöcher 4c je Kolbenringanordnung 34 sichtbar sind.

Wie in Fig. 2 gezeigt, sind die Kolbenringeinrichtungen 34 an der Außenumfangsfläche 9c der Trägerhülse 9 angeordnet. Insbesondere ist die Trägerhülse 9 durch eine zentrale Ringöffnung aller Kammerringe 4 durchgeführt. Die Kolbenringeeinrichtungen 34 bzw. die Kammerringe 4 sind dabei nebeneinander bzw. übereinander angeordnet, so dass die Kammerringe 4 aneinander stoßen. Optional liegt ein in Bezug auf die Längsachse L letzter Kammerring 4a an dem optionalen Bund 9b der Trägerhülse 9 an, wie dies in Fig. 2 beispielhaft gezeigt ist. Wie in Fig. 2 weiterhin gezeigt ist, können die Kolbenringeinrichtungen 34 derart ausgerichtet sein, dass die Durchgangsöffnungen der Kammerringe 4 fluchtend ausgerichtet sind. Die Kolbenringeinrichtungen 34, insbesondere die Kammerringe 4 können beispielsweise reibschlüssig mit der Außenumfangsfläche 9c der Trägerhülse 9 verbunden sein, z.B. indem die zentrale Ringöffnung der Kammerringe 4 und die Außenumfangsfläche 9c der Trägerhülse 9 eine Übermaßpassung bilden.

Wie in Fig. 2 beispielhaft gezeigt, können die Kolbenringeinrichtungen 34 zwischen dem optionalen ersten Endstück 7 und dem optionalen zweiten Endstück 4a eingespannt sein. Wie in Fig. 2 gezeigt, kann das erste Endstück 7 insbesondere in dem zweiten Endbereich 9f der Trägerhülse 9 angeordnet sein, und kann das zweite Endstück 4a in dem ersten Endbereich 9e der Trägerhülse 9 angeordnet sein, z.B. anliegend an dem optionalen Bund 9b der Trägerhülse 9. Das erste Endstück 7 kann beispielsweise durch einen Deckring ausgebildet sein, welches die Außenumfangsfläche 9c der Trägerhülse 9 umschließt. Das zweite Endstück 4a kann beispielsweise durch einen letzten bzw. zuäußerst liegenden Kammer 4 ausgebildet sein, wie in Fig. 2 beispielhaft gezeigt. Es ist jedoch auch denkbar, dass das zweite Endstück 4a durch den optionalen Bund 9b der Trägerhülse 9 oder durch ein Ringelement, wie für das erste Endstück 7 beschrieben, gebildet ist.

Wie in Fig. 2 beispielhaft gezeigt, kann das zweite Endstück 4a eine Ausnehmung 4b mit einem Innengewinde aufweisen. Es sind auch mehrere Ausnehmungen 4b je Endstück 4a denkbar, wobei die Ausnehmung(en) 4b fluchtend zu den Durchgangslöchern 4d der Kammerringe 4 angeordnet ist (sind). Das erste Endstück 7 kann seinerseits eine oder mehrere Ausnehmungen 7a aufweisen, welche fluchtend zu den Durchgangslöchern 4d der Kammerringe 4 angeordnet ist bzw. sind. Wie in Fig. 2 beispielhaft gezeigt ist, kann eine Gewindestange 10a vorgesehen sein, welche sich durch die Ausnehmungen 7a des ersten Endstücks 7 und die Durchgangslöcher 4d der Kammerringe 4 hindurch erstreckt und in das Innengewinde der jeweiligen Ausnehmung 4b des zweiten Endstücks 4a eingeschraubt ist. Zur axialen Sicherung der Kammerringe 4 entlang der Gewindestange 10a bzw. zur Erzeugung einer Klemmkraft zwischen dem ersten und dem zweiten Endstück 7, 4a kann eine Mutter 10b auf ein über das erste Endstück 7 vorstehendes Ende der Gewindestange 10a aufgeschraubt sein, wie dies in Fig. 2 beispielhaft gezeigt ist. Allgemein kann somit jede Kolbenringeinrichtung 34 ein Durchgangsloch 4d aufweisen und eine dadurch verlaufende Gewindestange 10a, welche das erste und das zweite Endstück 7, 4a miteinander verbindet. Auf diese Weise können alle Kolbenringeinrichtungen 34 entlang der Längsachse L miteinander verbunden sein.

Das Kolbenringpaket 11 ist an der Umfangsfläche 2a der Kolbenstange 2 angeordnet. Wie in Fig. 2 beispielhaft gezeigt, kann die Kolbenstange 2 durch die durch die Innenumfangsfläche 9d der Trägerhülse 9 definierte Ausnehmung durchgeführt sein. Somit ist das Kolbenringpaket 11 derart an der Kolbenstange 2 angeordnet, dass sich die Trägerhülse 9 entlang der Längsachse L erstreckt. Die Innenumfangsfläche 9d ist der Umfangsfläche 2a der Kolbenstange 2 zugewandt. Optional kann beispielsweise vorgesehen sein, dass die Trägerhülse 9 reibschlüssig an der Umfangsfläche 2a der Kolbenstange 2 befestigt ist. Beispielsweise kann die Innenumfangsfläche 9d der Trägerhülse 9 in dem ersten Endbereich 9e der Trägerhülse 9 an dem ersten axialen 2d Abschnitt der Umfangsfläche 2a an der Kolbenstange 2 anliegen, wie dies in Fig. 2 beispielhaft gezeigt ist. Allgemein kann die Innenumfangsfläche 9d der Trägerhülse 9 zumindest bereichsweise an der Umfangsfläche 2a der Kolbenstange 2 anliegen. Generell ist die Trägerhülse 9 damit lösbar an der an der Kolbenstange 2 befestigt. Wie in Fig. 2 außerdem erkennbar ist, kann die Innenumfangsfläche 9d im zweiten Endbereich 9f der Trägerhülse 9 in der radialen Richtung R beabstandet zu dem zweiten axialen Abschnitt 22 der Umfangsfläche 2a der Kolbenstange 2 gelegen sein. Damit kann im zweiten Endbereich 9f der Trägerhülse 9 ein Ringspalt zwischen der Innenumfangsfläche 9d der Trägerhülse 9 und der Umfangsfläche 2a der Kolbenstange 2 gebildet sein. Dies erleichtert die Zugänglichkeit der mechanischen Schnittstelle 9g, ausgestaltet z.B. in Form eines Innengewindes.

Wie in Fig. 2 ferner gezeigt ist, kann vorgesehen sein, dass der optionale Bund 9b der Trägerhülse 9 an dem Absatz 2b der Kolbenstange 2 anliegt. Der zweite Endbereich 9f der Trägerhülse 9, in welchem die mechanische Schnittstelle 9g vorzugsweise angeordnet ist, kann beispielsweise dem Dehnabschnitt 2f der Kolbenstange 2 zugewandt gelegen sein.

Der Führungsring 6 des Kolbens 1 dient zur Anlage an eine Innenfläche eines Zylinders des Verdichters (nicht gezeigt). Wie in den Fign. 1 und 2 beispielhaft gezeigt, umfasst der Kolben 1 ein Kolbenoberteil 5, an welchem der Führungsring 6 und ein optionaler Kolbenring 3 angeordnet ist. Das Kolbenoberteil 5 weist eine zylinderförmige Außenumfangsfläche 5b und einer entgegengesetzt zu dieser orientierten Innenumfangsfläche 5c auf. An der Außenumfangsfläche 5b können Ausnehmungen vorgesehen sein, in welchen Führungselemente oder ein Führungsring 6 angeordnet sind. Wie in Fig. 1 erkennbar, kann der Führungsring 6 z.B. einen trapezförmigen Umfang aufweisen. Die Innenumfangsfläche 5c definiert einen sich in Längsrichtung L zwischen zwei entgegengesetzten Stirnflächen des Kolbenoberteils 5 erstreckender zentraler Durchgang. Wie in Fig. 2 beispielhaft gezeigt, kann an einer ersten Stirnfläche ein Zentrierbund 5a ausgebildet sein, der den Durchgang umgibt. An einer entgegengesetzten hierzu gelegenen zweiten Stirnfläche kann eine Vertiefung 5e ausgebildet sein, welche den Durchgang seitlich umgibt, wie dies in Fig. 2 beispielhaft gezeigt ist.

Die Kolbenstange 2 kann durch den von der Innenumfangsfläche 5c definierten Durchgang des Kolbenoberteils 5 durchgeführt sein, wie dies in Fig. 2 gezeigt ist. Der Zentrierbund 5a kann hierbei optional in die Trägerhülse 9 eingeführt sein und an der Innenumfangsfläche 9d der Trägerhülse 9 anliegen. Vorteilhaft kann die erste Stirnfläche des Kolbenoberteils 5 an dem Kolbenringpaket 11, z.B. an der Trägerhülse 9 und/oder dem ersten Endstück 7 anliegen, wie in Fig. 2 gezeigt. Ein von dem Kolbenringpaket 11 vorstehendes Ende der optionalen Gewindestange 10a und die gegebenenfalls vorgesehene Mutter 10b können in entsprechenden Ausnehmungen 5d der ersten Stirnfläche des Kolbenoberteils 5 aufgenommen sein.

Die optionale Axialsicherung 8 kann beispielsweise einen Ring 8a mit einem Innengewinde 8b und mehreren Durchgangslöchern 8c aufweisen. Der Ring 8a kann mit seinem Innengewinde 8b mit einem optionalen Kolbenstangengewinde 2h , das im Endbereich der Kolbenstange 2 vorgesehen sein kann, verschraubt sein. Der Ring 8a kann zudem über in den Durchgangslöchern 8c angeordnete Befestigungsmittel 8a, und vorteilhafterweise über eine Abstandscheibe 8e mit dem Kolbenoberteil 5 verspannt und dadurch gesichert werden Somit wird durch die Axialsicherung 8 über das Kolbenoberteil 5 eine axiale Kraft auf die Trägerhülse 9 aufgebracht bzw. das Kolbenringpaket 11 wird zwischen der Axialsicherung 8 und dem Bund 2b eingespannt. Grundsätzlich ist auch denkbar, dass die Axialsicherung 8 direkt auf ein Ende der Trägerhülse 9 drückt.

Wie in Fig. 2 beispielhaft gezeigt, kann der Ring 8a in der Vertiefung 5e des Kolbenoberteils 5 angeordnet sein. Optional kann in Bezug auf die Längsachse L zwischen dem Boden der Vertiefung 5e und dem Ring 8a eine Abstandsscheibe 8e angeordnet sein, wie in Fig. 2 beispielhaft gezeigt. Ferner können die Durchgangslöcher 8c des Rings 8a mit Innengewinden versehen sein, in welche Schrauben 8d eingeschraubt sind, so dass diese gegen die Abstandsscheibe 8e oder direkt gegen den Boden der Vertiefung 5e drücken.

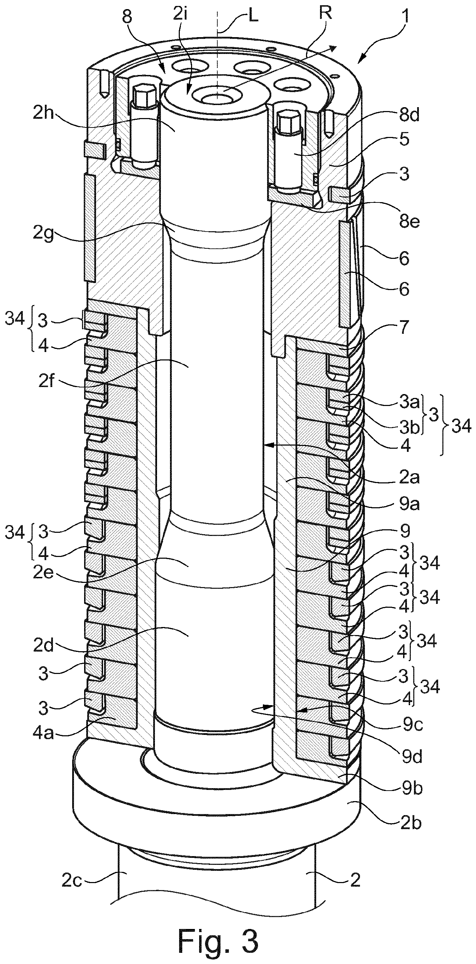

In Fig. 3 ist ein weiterer Kolben 1 beispielhaft im Schnitt gezeigt. Der in Fig. 3 gezeigte Kolben 1 unterscheidet sich von dem in den Fign. 1 und 2 gezeigten Kolben lediglich dadurch, dass die Kolbenringeinrichtungen 34 nicht durch eine Gewindestange 10a miteinander verbunden sind, sondern zwischen dem ersten und dem zweiten Endstück 4a, 7 durch eine von dem Kolbenoberteil 5 und der Axialsicherung 8 ausgeübte Kraft eingespannt sind. Insbesondere liegt die erste Stirnfläche des Kolbenoberteils 5 an dem zweiten Endstück 7 an, so dass die Kolbenringeinrichtungen 34 zwischen dem Kolbenoberteil 5 und dem Bund 9b der Trägerhülse 9 eingespannt sind. Auf diese Weise können die Kolbenringeinrichtungen 34 entlang der Längsachse L miteinander verbunden bzw. gegenseitig sicher gehalten sein.

In Fig. 4 ist beispielhaft ein Abziehwerkzeug 20 zur Demontage des Kolbens 1 dargestellt. Wie in Fig. 4 beispielhaft gezeigt, kann das Abziehwerkzeug 20 eine Kopplungseinrichtung 21 zur Anbringung an der bevorzugten mechanischen Schnittstelle 9g der Trägerhülse 9 und eine Zugeinrichtung 22 zur Aufbringung einer entlang der Längsachse L gerichteten Kraft F auf die Kopplungseinrichtung 21 aufweisen.

Die Kopplungseinrichtung 21 kann beispielsweise eine Hülse 21b und eine Stirnpatte 21d aufweisen. Wie in Fig. 4 beispielhaft dargestellt, kann die Hülse 21b einen offenen Aufnahmeraum 21c definieren, welcher z.B. zylinderförmig ausgebildet sein kann. An einem ersten Endabschnitt der Hülse 21b kann eine Verbindungsstruktur 21a, z.B. in Form eines Gewindes, ausgebildet sein, welches zur Verbindung mit der bevorzugten mechanischen Schnittstelle 9g der Trägerhülse 9 des Kolbenringpakets 11 ausgebildet ist. In Fig. 4 ist beispielhaft gezeigt, dass die Verbindungsstruktur 21a beispielsweise als ein Außengewinde ausgebildet sein kann.

Die Stirnplatte 21d ist mit der Hülse 21b verbunden. Beispielsweise können die Hülse 21b und die Stirnplatte 21d einstückig bzw. als ein Teil ausgebildet sein. Die Stirnplatte 21d kann insbesondere an einem entgegengesetzt zu dem ersten Endabschnitt gelegenen zweiten Endabschnitt der Hülse 21b angeordnet sein, wie in Fig. 4 beispielhaft gezeigt. Die Stirnplatte 21d kann beispielsweise ein Durchgangsloch 21e mit einem Innengewinde aufweisen, wie in Fig. 4 gezeigt.

Die Zugeinrichtung 22 kann, wie in Fig. 4, besonders einfach durch eine Gewindestange 22a realisiert sein, welche in das Innengewinde 21e der Stirnplatte 21d einschraubbar ist. Damit ist die Gewindestange 22a durch das Durchgangsloch 21e der Stirnplatte 21d in den Aufnahmeraum 21c einführbar. Allgemein kann die Zugeinrichtung 22 von einem axialen Ende der Hülse 21b her in den Aufnahmeraum 21c einführbar sein und sich relativ zur Hülse 21b abstützen, um eine axiale Kraft auszuüben.

Mithilfe des beschriebenen Abziehwerkzeugs 20 lässt sich ein einfaches Verfahren zur Demontage des Kolbens 1 durchführen. Das im Folgenden beschriebene Verfahren kann jedoch auch mit anders gestalteten Abziehwerkzeugen 20 durchgeführt werden.

Falls vorgesehen werden zunächst die Axialsicherung 8 und gegebenenfalls das Kolbenoberteil 5 von der Kolbenstange 2 entfernt. Der Kolben 1 liegt dann in dem in Fig. 4 gezeigten Zusammenbauzustand vor.

Um das Kolbenringpaket 11, das lösbar mit der Kolbenstange 2 verbunden ist, z.B. weil die Trägerhülse 9 reibschlüssig an der Umfangsfläche 2a der Kolbenstange 2 anliegt, von der Kolbenstange 2 zu entfernen, wird das Abziehwerkzeugs 20 mit der bevorzugten mechanischen Schnittstelle 9g der Trägerhülse 9 des Kolbenringpakets 11 verbunden. Beispielsweise wird die Stirnseite 2i der Kolbenstange 2 in den Aufnahmeraum 21c der Hülse 21b der Kopplungseinrichtung 21 eingeführt und die Verbindungsstruktur 21a der Hülse 21b mit der bevorzugten mechanischen Schnittstelle 9g der Trägerhülse 9 verbunden. Beispielsweise kann die als Außengewinde ausgestaltete Verbindungsstruktur 21a der Hülse 21b mit der als Innengewinde ausgestalteten mechanischen Schnittstelle 9g der Trägerhülse 9 verschraubt werden, wie dies in Fig. 4 gezeigt ist.

In einem weiteren Schritt erfolgt ein Abziehen des Kolbenringpakets 11 als Ganzes von der Kolbenstange 2 durch Aufbringen einer entlang der Längsachse L gerichteten Kraft F auf die Trägerhülse 9 mittels des Abziehwerkzeugs 20, insbesondere mittels der Zugeinrichtung 22. Die Zugeinrichtung 22 kann sich beispielsweise an der Stirnseite 2i der Kolbenstange 2 abstützen und eine von der Kolbenstange 2 weg gerichtete Kraft F auf die Kopplungseinrichtung 21 ausüben, um das Kolbenringpaket 11 von der Kolbenstange 2 abzuziehen. Wie in Fig. 4 beispielhaft gezeigt, kann z.B. die Gewindestange 22a in das Innengewinde 21e der Stirnplatte 21d einschraubbar werden, so dass sich diese gegen das im Aufnahmeraum 21c gelegene axiale Ende, die Stirnsetie 2i der Kolbenstange 2 abstützt. Optional kann hierbei zwischen dem axialen Ende und der Gewindestange 22a eine Unterlegscheibe 23 angeordnet sein, um Beschädigungen der Kolbenstange 2 durch die Gewindestange 22a vorzubeugen. Wie in Fig. 4 durch den Pfeil "F" angedeutet wird somit eine Reaktionskraft auf die Hülse 21b ausgeübt, die über die mechanische Schnittstelle 9g auf die Trägerhülse 9 übertragen wird, so dass diese entlang der Längsachse L von der Kolbenstange 2 abgezogen wird.

Somit kann das Kolbenringpaket 11 als Ganzes von der Kolbenstange 2 gelöst werden. Insbesondere erfolgt hierbei eine Demontage aller Kolbenringeinrichtungen 34 gleichzeitig. Somit kann die Demontage des Kolbens 1 auf einfache und effiziente Weise erfolgen. In gleicher Weise kann ein vormontiertes Kolbenringpaket 11 als Ganzes an der Kolbenstange 2 montiert werden. Somit wird der Austausch der Kolbenringeinrichtungen 34 bzw. die Montage von Kammerringen 4 und Kolbenringen 3 äusserst schnell, effizient und sicher ermöglicht. Ein wesentlicher Vorteil ist zudem darin zu sehen, dass die Montage des Kolbenringpakets 11 vorteilhafterweise werkseitig erfolgt, sodass alle erforderlichen Prüfungs- und Sicherheitsvorgaben bereits werkseitig erfolgen können. Zudem ist sichergestellt, dass bei der Montage des Kolbenringpakets 11 vor Ort, beispielsweise auf einem Schiff, kaum Montagefehler auftreten, da die Kammerringen 4 und Kolbenringen 3 bereits vormontiert im Kolbenringpaket 11 angeliefert werden.

## Patentansprüche

1. Kolben (1) für einen Verdichter, aufweisend:
eine Kolbenstange (2), welche eine Längsachse (L) definiert; und
ein Kolbenringpaket (11) mit einer sich entlang der Längsachse (L) erstreckenden Trägerhülse (9), welche an einer Umfangsfläche (2a) der Kolbenstange (2) angeordnet und lösbar an der Kolbenstange (2) befestigt ist, und einer Vielzahl von entlang der Längsachse (L) nebeneinander angeordneten Kolbenringeinrichtungen (34), welche an einer Außenumfangsfläche (9c) der Trägerhülse (9) angeordnet und an der Trägerhülse (9) befestigt sind, wobei vorzugsweise die Trägerhülse (9) eine mechanische Schnittstelle (9g) zur Anbringung eines Abziehwerkzeugs (20) zum Aufbringen einer entlang der Längsachse (L) gerichteten Kraft (F) aufweist.

2. Kolben (1) nach Anspruch 1, wobei die Trägerhülse (9) reibschlüssig an der Umfangsfläche (2a) der Kolbenstange (2) befestigt ist.

3. Kolben (1) nach Anspruch 1 oder 2, wobei die mechanische Schnittstelle (9g) durch ein Gewinde ausgebildet ist.

4. Kolben (1) nach Anspruch 3, wobei eine Innenumfangsfläche (9d) der Trägerhülse (9) in einem ersten Endbereich (9e) der Trägerhülse (9) an einem ersten axialen Abschnitt (2d) der Umfangsfläche (2a) der Kolbenstange (2) anliegt, wobei die mechanische Schnittstelle (9g) an einem in Bezug auf die Längsachse (L) entgegengesetzt zu dem ersten Endbereich (9e) gelegenen zweiten Endbereich (9f) der Trägerhülse (9) an der Innenumfangsfläche (9d) als Innengewinde ausgebildet ist, und wobei die Innenumfangsfläche (9d) im zweiten Endbereich (9f) der Trägerhülse (9) in einer senkrecht auf die Längsachse (L) stehenden radialen Richtung (R) beabstandet zu einem Dehnabschnitt (2f) der Umfangsfläche (2a) der Kolbenstange (2) gelegen ist.

5. Kolben (1) nach einem der voranstehenden Ansprüche, wobei die Trägerhülse (9) einen Hülsenkörper (9a) und einen an einem axialen Ende des Hülsenkörpers (9a) radial abstehenden Bund (9b) aufweist, und wobei eine in Bezug auf die Längsachse (L) letzte Kolbenringeinrichtung (34) an dem Bund (9b) anliegt.

6. Kolben (1) nach Anspruch 5, wobei der Bund (9b) an einem Absatz (2b) der Kolbenstange (2) anliegt.

7. Kolben (1) nach einem der voranstehenden Ansprüche, wobei die Kolbenringeinrichtungen (34) entlang der Längsachse (L) miteinander verbunden sind.

8. Kolben (1) nach Anspruch 7, wobei das Kolbenringpaket (3) ein erstes Endstück (4a) und ein zweites Endstück (7) aufweist, und wobei die Kolbenringeinrichtungen (34) zwischen dem ersten und dem zweiten Endstück (4a, 7) eingespannt sind.

9. Kolben (1) nach Anspruch 8, wobei jede der zwischen dem ersten und dem zweiten Endstück (4a; 7) eingespannten Kolbenringeinrichtungen (34) ein Durchgangsloch (4d) aufweist, und eine Gewindestange (10a), welche das erste und das zweite Endstück (4a; 7) miteinander verbindet, sich durch die Durchgangslöcher (4d) hindurch erstreckt.

10. Kolben (1) nach Anspruch 8 oder 9, wobei erste Endstück (4a) durch eine Kolbenringeinrichtung (34) und das zweite Endstück (7) durch eine weitere Kolbenringeinrichtung (34) gebildet ist.

11. Kolben (1) nach einem der voranstehenden Ansprüche, wobei die Kolbenringeinrichtungen (34) jeweils einen die Außenumfangsfläche (9c) der Trägerhülse (9) umschließenden Kammerring (4) und einen Kolbenring (3) aufweisen, welcher an dem Kammerring (4) befestigt ist.

12. Verdichter mit einem Kolben (1) nach einem der voranstehenden Ansprüche.

13. Abziehwerkzeug (20) zur Demontage eines Kolbens (1) nach einem der Ansprüche 1 bis 11, aufweisend:
eine Kopplungseinrichtung (21) zur Anbringung an einer mechanischen Schnittstelle (9g) der Trägerhülse (9); und eine Zugeinrichtung (22) zur Aufbringung einer entlang der Längsachse (L) gerichteten Kraft (F) auf die Kopplungseinrichtung (21).

14. Abziehwerkzeug (20) nach Anspruch 13, wobei die Kopplungseinrichtung (21) eine Hülse (21b), in welcher ein Endbereich der Kolbenstange (2) aufnehmbar ist und welche mit einer mechanischen Schnittstelle (2g) der Trägerhülse (9) koppelbar ist, und eine mit der Hülse (21b) verbundene Stirnplatte (21d) aufweist, welche ein Durchgangsloch (21e) mit einem Innengewinde (21f) aufweist, und wobei die Zugeinrichtung (22) eine Gewindestange (22a) aufweist, welche in das Innengewinde (21f) der Stirnplatte (21d) einschraubbar ist, um sich gegen eine Stirnseite (2i) der Kolbenstange (2) abzustützen.

15. Verfahren zur Demontage eines Kolbens (1) nach einem der Ansprüche 1 bis 11, umfassend:
Verbinden eines Abziehwerkzeugs (20) mit einer mechanischen Schnittstelle (9g) der Trägerhülse (9) des Kolbenringpakets (11); und
Abziehen des Kolbenringpakets (11) als Ganzes von der Kolbenstange (2) durch Aufbringen einer entlang der Längsachse (L) gerichteten Kraft auf die Trägerhülse (9) mittels des Abziehwerkzeugs (20).
